# EUROPÄISCHE PATENTANMELDUNG

(11) **EP 1 577 335 A1**
(43) Veröffentlichungstag der Anmeldung: **21.09.2005**
(21) Anmeldenummer: 05004752.1
(22) Anmeldetag: 04.03.2005
(51) Int. Cl.: C08G 69/16, G01N 21/35

(54) **Verfahren zur Herstellung von Polyamid**

(30) Priorität: 18.03.2004 DE 102004013258
(71) Anmelder: LANXESS Deutschland GmbH, 51369 Leverkusen (DE)
(72) Erfinder: Wolf, Udo, Dr., 47906 Kempen (DE); Schultz, Claus-Ludolf, Dr., 47803 Krefeld (DE); Schäfer, Marcus, Dr., 47829 Krefeld (DE)

(57) **Zusammenfassung**

Die Erfindung beschreibt ein Verfahren zur Herstellung von Polyamid durch Polykondensation wenigstens eines Lactams und anschließender Granulierung des Polyamids, wobei die Polykondensation mindestens einstufig durchgeführt wird, dadurch gekennzeichnet, dass während und/oder nach der Polykondensation und/oder vor, während und/oder nach der Granulierung ein Gemisch, enthaltend Lactam und/oder Oligomere des Lactams, mittels Nahinfrarot-Spektroskopie analysiert wird.

## Beschreibung

Die Erfindung betrifft ein Verfahren zur Herstellung von Polyamid auf Basis von Lactamen.

Im industriellen Maßstab wird Polyamid 6 in einem vereinfacht kontinuierlichem Rohr (VK-Rohr) produziert, in dem flüssiges Caprolactam mit ca. 1 - 4 % Wasser von oben einem oder einer Reihe von vertikalen Rohrreaktoren zugeführt wird. Überschüssiges Wasser wird abdestilliert. Die Polymerisation wird bei Temperaturen zwischen 240 und 270 °C und einer Verweilzeit von 15 bis zu 30 Stunden durchgeführt. Eine deutliche Beschleunigung des Verfahrens um einige Stunden lässt sich durch Vorschalten einer Druckstufe erreichen, wobei die geschwindigkeitsbestimmende Spaltung von Caprolactam bei erhöhtem Druck unter ansonsten ähnlichen Bedingungen durchgeführt wird.

Bei diesem Verfahrenskonzept wird die erreichbare Viskosität durch den Wassergehalt der Schmelze oder durch Zugabe kettenregelnder Substanzen bestimmt. In der Regel werden relative Viskositäten um 2,6 - 3,0 (gemessen als 1 %-ige Lösung in m-Kresol bei 25°C) erreicht.

Aus thermodynamischen Gründen ist bei diesem Verfahren der Umsatz begrenzt. So liegen im Gleichgewicht bei 270 °C neben Polyamid noch ca. 10 % Restgehalt an niedermolekularen Spezies vor, im wesentlichen Caprolactam und cyclische Oligomere (Dimer, Trimer, Tetramer, etc.). Eine Sonderstellung nimmt hierbei das Dimere ein, da es zu Problemen, z.B. durch Ablagerungen bei der Weiterverarbeitung des fertigen Polymeren, führen kann.

Die Eigenschaften der Polyamide während des Herstellprozesses können mit verschiedenen Methoden gemessen werden. Beispielsweise kann die relative Lösungsviskosität, der Extraktgehalt, der Wassergehalt, der Gehalt an Monomer und Oligomeren oder die Anzahl der Carboxyl- und Aminoendgruppen gemessen werden.

Die analytischen Methoden, die angewandt werden, sind dem Fachmann bekannt. Die Bestimmung der relativen Lösungsviskosität erfolgt in der Regel durch vergleichende Kapillarviskosimetrie aus Lösungen in Kresol oder Schwefelsäure. Der Extraktgehalt wird beispielsweise durch Extraktion einer Probe und Rückwiegen des Granulates bestimmt. Der Wassergehalt einer Probe kann durch Karl-Fischer Titration bestimmt werden. Zur Bestimmung von Monomeren und Oligomeren wird in der Regel die Probe extrahiert oder gelöst und ausgefällt und anschließend eine HPLC-Analytik durchgeführt. Die Anzahl der Carboxyl- und Aminoendgruppen wird in der Regel durch Titration bestimmt. Es handelt sich also um eine Vielzahl von Methoden, die mehrere Arbeitsschritte und den Einsatz von Chemikalien, beispielsweise Lösemittel oder Titrationsagenzien erfordern.

Ähnliche Probleme gelten auch bei der Analyse des Fertigproduktes. Die oben beschriebenen Analysenmethoden sind arbeitsintensiv und zeitintensiv. Weiterhin können sie teilweise nur an kleinen Probemengen durchgeführt werden, die nicht immer repräsentativ sind und durch die Messung so verändert werden, dass sie nicht erneut untersucht werden können.

US-A 5 674 974 offenbart ein kontinuierliches Verfahren zur Herstellung von Polyamiden mittels Schmelzepolymerisation aus einem oder mehreren Diaminen und einer oder mehreren Dicarbonsäuren, insbesondere auf Basis von Adipinsäure und Hexamethylendiamin. Die Prozesskontrolle erfolgt mittels near-infrared(NIR)-Spektroskopie, indem die Konzentration der Carboxyl- und Amino-Endgruppen bestimmt und das Verhältnis der beiden Endgruppen über die Zugabe des Diamins kontrolliert wird. Eine Anwendung dieses Verfahrens bei der Polymerisation von Lactamen ist nicht möglich, da Lactame cyclische Verbindungen sind und daher keine Endgruppen haben.

Weiterhin wird ein sehr spezieller Reaktor beschrieben, für den die Messungen gelten. Die Polymerisation gemäß US-A 5 674 974 erfolgt durch Gegenstromreaktion eines säurereichen Präpolymeren mit dampfförmigen Diamin. Dieses Verfahren ist bei Lactamen nicht anwendbar, da nicht zwei Komponenten im stöchiometrischen Verhältnis eingesetzt werden.

US-B 6 610 816 beschreibt den Einsatz der NIR-Spektroskopie zur Prozesskontrolle bei der diskontinuierlichen Herstellung von Polyamiden auf Basis von Diaminen und Dicarbonsäuren. Während des Schmelzepolymerisationsprozesses wird mittels NIR-Spektroskopie das Molverhältnis eines geladenen Diaminmonomers und eines geladenen Dicarbonsäuremonomers in dem Reaktionsgemisch sowie wenigstens eine der folgenden Eigenschaften überwacht: Wassergehalt des Reaktionsgemisches, Konzentration der Carboxyl-Endgruppen und der Amino-Endgruppen, Molgewicht, relative Viskosität, Schmelzeviskosität des Polyamids in dem Reaktionsgemisch. Auf Basis der ermittelten Werte wird die Polykondensationsreaktion schnell und automatisch kontrolliert. Auch dieses Verfahrens kann bei der Polymerisation von Lactamen nicht angewendet werden, da Lactame cyclische Verbindungen sind und daher keine Endgruppen haben.

Die Aufgabe der vorliegenden Erfindung liegt darin, ein Verfahren zur Herstellung von Polyamiden (PA) auf Basis von Lactamen bereitzustellen, bei dem mittels eines Analyseverfahrens Produktparameter während des Herstellverfahrens zeitnah erfasst werden. Des Weiteren soll das Analyseverfahren auch Produktparameter am Fertigprodukt zeitnah erfassen.

Die Aufgabe wird dadurch gelöst, dass Produktparameter wie Monomergehalt, Oligomerengehalt oder Restextrakt mittels Nahinfrarot(NIR)-Spektroskopie während des Herstellverfahrens von Polyamid auf Basis von Lactamen sowie nach der Herstellung am fertigen Produkt bestimmt werden.

Gegenstand der Erfindung ist ein Verfahren zur Herstellung von Polyamid durch Polykondensation wenigstens eines Lactams und anschließender Granulierung des Polyamids, wobei die Polykondensation mindestens einstufig durchgeführt wird, dadurch gekennzeichnet, dass während und/oder nach der Polykondensation und/oder vor, während und/oder nach der Granulierung ein Gemisch, enthaltend Lactam und/oder Oligomere des Lactams, mittels Nahinfrarot-Spektroskopie analysiert wird.

Einstufige und zweistufige Verfahren für die Polykondensation von Lactamen zur Herstellung von Polyamid sind dem Fachmann bekannt und werden beispielsweise im Kunststoff Handbuch, Technische Thermoplaste Polyamide ¾, Carl Hanser Verlag, München, 1998, S. 65 - 70 beschrieben. Die Polykondensation kann nach dem erfindungsgemäßen Verfahren beispielsweise einstufig ausgeführt sein. Dabei wird das Lactam mit Wasser und ggf. Additiven in einem Reaktor, z.B. einem VK-Rohr, zur Reaktion gebracht. Die Polykondensation wenigstens eines Lactams kann insbesondere auch zweistufig ausgeführt sein. Bei einer zweistufigen Polykondensation erfolgt in der ersten Stufe die Herstellung des Präpolymers mittels Hydrolyse des Lactams und in der zweiten Stufe die Polykondensation des Präpolymers.

Polyamid 6 wird in der Regel in einem mehrstufigen Verfahren hergestellt. Caprolactam und Additive wie beispielsweise Wasser und Kettenregler werden in eine Druckstufe gegeben, in der die Hydrolyse des Caprolactams stattfindet und ein Präpolymer erzeugt wird. Dieses Präpolymer kann unter Druck oder durch eine Schmelzeaustragspumpe direkt oder über einen Schmelzetrockner in ein VK-Rohr überführt werden. Vorzugsweise erfolgt dies über einen Schmelzeverteiler. Flüchtige Komponenten werden über einen Dephlegmator aus der Reaktion entfernt. Am Austritt des VK-Rohrs wird die Schmelze über eine Austragspumpe in eine Granuliervorrichtung, beispielsweise für die Strang- oder Unterwassergranulierung, überführt. Das Granulat wird dann in einem Extrakteur extrahiert und anschließend in einem Trockner getrocknet und in ein Silo überführt. Die Extraktwässer werden in einer Rückgewinnungsanlage konzentriert und der Polymerisation erneut zugefügt.

Die erfindungsgemäße Analyse mittels NIR-Spektroskopie kann im Wesentlichen entlang der gesamten Prozesskette zur Herstellung von Polyamid, einschließlich der Granulierung, erfolgen. Erfindungsgemäß wird ein Gemisch, enthaltend Lactam und/oder Oligomere des Lactams, während und/oder nach der Polykondensation mittels NIR-Spektroskopie analysiert. Beispielsweise kann die Zusammensetzung der Schmelze in der Druckstufe, d.h. während der Hydrolyse des Lactams zur Herstellung eines Präpolymers, oder in verschiedenen Zonen des VK-Rohrs, d.h. während der Polykondensation des Präpolymers, erfolgen. Die Analyse kann beispielsweise auch in Zu- und Ableitungen stattfinden, die zu den Reaktionsbehältem oder von den Reaktionsbehältern weg führen. Sind zusätzliche Verfahrensschritte vorgesehen, z.B. eine Trocknung des Präpolymers vor der Polykondensation, so kann auch vor, während und/oder nach diesen Verfahrensschritten eine NIR-Analyse durchgeführt werden.

Erfindungsgemäß wird das Lactam und/oder Oligomere des Lactams enthaltende Gemisch zusätzlich oder alternativ vor, während und/oder nach der Granulierung mittels NIR-Spektroskopie analysiert. Dies schließt eine NIR-Analyse des Polyamidgranulats in den der Granulierung ggf. nachfolgenden Verfahrensschritten ein. So kann das Granulat z.B. vor, während und/oder nach der Extraktion sowie der anschließenden Trocknung analysiert werden. Auch eine Analyse des fertigen Granulats, z.B. im Silo oder bei Partieproben im Labor, ist möglich. Die NIR-Analyse kann beispielsweise im Förderstrom vom Granulator zum Extrakteur oder vom Extrakteur zum Trockner oder vom Trockner zur Silierung stattfinden. Das Granulat kann aber auch in verschiedenen Zonen im Extrakteur oder im Trockner mittels der erfindungsgemäßen NIR-Analyse untersucht werden. Eine online-Analyse des Granulats kann beispielsweise dazu eingesetzt werden, mit Hilfe der ausgewerteten Analyse einzelne Silos anzusteuern.

Ein Lactam und/oder Oligomere des Lactams enthaltendes Gemisch gemäß vorliegender Erfindung kann beispielsweise das Reaktionsgemisch der ersten, zweiten oder einer beliebigen Verfahrensstufe der Polykondensation sein. Darunter sind auch Lactam und/oder Oligomere enthaltende Produktströme zu verstehen, die nicht unmittelbar bei der Polykondensationsreaktion oder der Granulierung anfallen, sondern beispielsweise bei nachgeordneten Verfahrensschritten wie Extraktion, Trocknung, Zugabe von Additiven.

Dementsprechend können erfindungsgemäß auch derartige Lactam und/oder Oligomere des Lactams enthaltende Gemische mittels NIR-Spektroskopie untersucht werden. So kann beispielsweise das in den Extraktionswässern enthaltene Lactam und/oder seine Oligomere in der Wasser-Rückgewinnungsanlage, die dem Extrakteur nachgeschaltet ist, untersucht werden.

Die NIR-Analyse des Lactam und/oder Oligomere des Lactams enthaltenden Gemisches erfolgt vorzugsweise online.

Eine online-Analyse kann beispielsweise an der PA-Schmelze in der Druckstufe oder in verschiedenen Zonen des VK-Rohrs stattfinden. Dies kann beispielsweise durch Installation einer Messsonde erfolgen, die über Lichtwellenleiter mit einer auswertenden Einheit verbunden ist. Die Sonde kann direkt durch die Behälterwand der Druckstufe oder des VK-Rohrs in die Schmelze geführt werden. Sie kann aber auch an einem Bypass angeschlossen sein. Dadurch ist eine einfachere Reinigung und Wartung der Sonde möglich. Weiterhin ist es möglich, die Messsonde direkt oder in einen Bypass der Verbindung zwischen Druckstufe und VK-Rohr, oder Druckstufe und Schmelzetrockner oder Schmelzetrockner und VK-Rohr zu installieren. Bevorzugt kann die Messsonde direkt oder über einen Bypass in der Endzone des VK-Rohrs installiert sein.

Daneben kann die erfindungsgemäße NIR-Analyse auch online an den Prozesswässern durchgeführt werden. Bevorzugt können die Extraktionswässer in und nach der Extraktion analysiert werden. Der Gehalt an Monomeren und Oligomeren kann im Ablauf der Extraktionswässer und in verschiedenen Stufen der Rückgewinnung online analysiert werden. Diese Analyse kann ebenfalls durch eine Messsonde direkt oder über einen Bypass erfolgen.

Im Falle von transparenten Flüssigkeiten oder Schmelzen, beispielsweise den Extraktionswässern oder der Polyamidschmelze, werden die NIR-Spektren bevorzugt als Transmissionsspektren aufgenommen. Prozesstaugliche NIR-Messzellen zur Aufnahme der NIR-Spektren von Prozessflüssigkeiten sind hinlänglich bekannt und z.B. kommerziell verfügbar (z.B. Fa. Bruker Optik GmbH, Deutschland). Analog können NIR-Spektren von Polymerschmelzen als Transmissionsspektren aufgenommen werden. Für die Aufnahme von NIR-Transmissionsspektren unter Verwendung von Lichtleitern geeignete Spektrometer sind bekannt und z.B. kommerziell verfügbar (z.B. Typ Matrix-F, Fa. Bruker Optik GmbH, Deutschland).

Die NIR-Analyse der Polyamidgranulate auf Basis von Lactamen kann prinzipiell wie die Aufnahme von NIR-Spektren von Polymergranulaten allgemein erfolgen, d.h. es werden bevorzugt Reflexionsspektren aufgenommen. Hierfür geeignete Spektrometer sind aus dem Stand der Technik bekannt und auch kommerziell verfügbar (z.B. Typ Matrix-E, Fa. Bruker Optik GmbH, Karlsruhe).

Um bei der Messung der Polyamidgranulate eine größere repräsentative Probenmenge zu erfassen, wird die als Granulatschüttung vorliegende Probe während der Messung bewegt, insbesondere gedreht oder verschoben. Beispielsweise kann ein Messzylinder um die eigene Achse gedreht werden oder eine Messschale azentrisch über einen Messsensor verschoben werden. Derartige Vorrichtungen sind kommerziell verfügbar.

Eine weitere Methode zur Bestimmung der Produkteigenschaften, wie Monomergehalt, Oligomerengehalt oder Restextrakt Endgruppen oder Wassergehalt mittels NIR-Analyse besteht darin, an einer vorgegebenen Probenentnahmestelle beispielsweise an der Druckstufe, dem Schmelzetrockner, dem VK-Rohr, der Granulierung, dem Extrakteur, dem Trockner, dem Silo, der Rückgewinnungsanlage oder den Verbindungen zwischen diesen Elementen eine Probe z.B. der Schmelze, des Extraktionswassers oder des Granulats zu entnehmen und diese dann mittels NIR-Spektroskopie zu analysieren.

Als relevante Produkteigenschaften können beispielsweise die Konzentrationen von Monomer, cyclischen Oligomeren oder Extraktgehalt bestimmt werden. Weiterhin sind dem NIR-Spektrum Banden bezogen auf Restfeuchte, Endgruppen, Additive oder Molgewicht enthalten, die ebenfalls zur Auswertung hinzugezogen werden können.

Die mittels NIR-Spektroskopie gemessenen Werte können online oder zeitnah erfasst werden, so dass eine Kontrolle des Prozesses erfolgen kann. Beispielsweise kann der Extraktgehalt in der Polyamidschmelze ermittelt werden und das Temperaturprogramm entsprechend eingestellt werden. Beispielsweise kann der Extraktgehalt des Polyamidgranulats während der Extraktion gemessen werden und die Extraktionswassermenge oder die Temperatur des Extraktwassers eingestellt werden.

Darüber hinaus kann aus dem NIR-Spektrum beispielsweise der Extraktgehalt und die Restfeuchte des Polyamidgranulats während der Trocknung ermittelt werden und die Inertgasmenge oder Inertgastemperatur eingestellt werden. Ferner kann beispielsweise die Zusammensetzung der Extraktionswässer während der Rückgewinnung kontrolliert werden und Verweilzeiten, Temperaturen und Drücke eingestellt werden. Beispielsweise kann die Zusammensetzung der Granulate ermittelt werden und die Förderung der Granulate beispielsweise in Silos gesteuert werden. Beispielsweise können schnelle Ausprüfungen am Granulat durchgeführt werden, um die Freigabekriterien von Partien schnell zu ermitteln.

Das erfindungsgemäße Verfahren kann beispielsweise auf die Herstellung von Polyamid aus folgenden Lactamen angewendet werden: ε-Caprolactam, Laurinlactam, Oenantholactam, Cyclodecanonoxim. Weiterhin kann das erfindungsgemäße Verfahren beispielsweise auf die Herstellung von Polyamid aus substituierten Lactamen angewendet werden. Außerdem kann das erfindungsgemäße Verfahren beispielsweise auf die Herstellung von Copolyamid enthaltend Lactame oder substituierte Lactame angewendet werden.

Die NIR-Analyse von Polyamiden auf Basis von Diaminen und Dicarbonsäuren ist aus dem Stand der Technik bekannt. Gemäß der vorliegenden Erfindung ist jedoch auch die NIR-Analyse von Polyamiden auf Basis von Lactamen möglich, obgleich sich die NIR-Spektren von Lactamen und cyclischen Oligomeren mit den Spektren der korrespondierenden Polyamide stark überlagern. Die funktionellen Gruppen (Amidgruppen und CH₂-Gruppen) sind in Polyamid 6, Caprolactam und dimerem Caprolactam gleichermaßen vorhanden. Daher zeigen die NIR-Spektren dieser Verbindungen beispielsweise die Obertonbanden der NH-Gruppen mit Maximum bei ca. 6750 cm⁻¹ sowie der CH₂-Gruppen bei 5832 und 5701 cm⁻¹.

Als Nahinfrarot-Bereich im Sinne der vorliegenden Erfindung wird der Bereich der Wellenzahlen von 4000 bis 12000 cm⁻¹ angesehen. Zur Spektrenauswertung wird bevorzugt der Spektralbereich 7500-5000 cm⁻¹ herangezogen.

Die Überlagerung der Spektren hängt damit zusammen, dass Lactame, insbesondere ε-Caprolactam, ihre Dimere und die korrespondierenden Polyamide eine ähnliche chemische Struktur besitzen. Anders als bei Polyamiden auf Basis von Diaminen und Dicarbonsäuren, bei denen mittels NIR-Spektroskopie die Konzentration der Endgruppen ermittelt wird, kann bei Polyamiden auf Basis von Lactamen nicht die Bestimmung der Endgruppen und deren relativer Anzahl, z.B. für die Bestimmung der Zusammensetzung der Schmelze, herangezogen werden.

Wegen der im NIR vorhandenen starken Spektrenüberlagerung ist die Auswertung einzelner, voneinander separierter Banden in der Regel nicht möglich. Für quantitative Gehaltsbestimmungen wird z.B. der PLS(Partial Least Squares)-Algorithmus angewendet. Der PLS-Algorithmus ist u.a. in T. Naes et al., A user-friendly guide to Multivariate Calibration and Classification, NIR Publications, Chichester, 2002 beschrieben.

Zur Bestimmung der Produkteigenschaften anhand der NIR-Spektren muss eine Kalibrierung der Spektren durchgeführt werden. Dazu wird zeitnah und ortsnah zur Aufnahme von NIR-Spektren eine Produktprobe entnommen und mittels einer alternativen Methode analysiert. Beispielsweise kann für die Bestimmung von Wasser im Granulat die Feuchte nach der Karl-Fischer-Methode bestimmt werden. Die Bestimmung des Restextraktes kann mittels HPLC-Analytik bestimmt werden. Die Bestimmung des Caprolactams und der Oligomeren (Dimer, Trimer und Tetramer) in Polyamid mittels HPLC-Analyse erfolgt nach Umfällung des Polymeren aus z.B. Ameisensäurelösungen mit z.B. Methanol aus dem Extrakt. Der Extrakt muss zur HPLC-Analyse aufkonzentriert werden. Die HPLC-Analyse erfolgt als reverse phase Chromatographie mit UV-Detektion bei 210 nm. Die Quantifizierung wird nach der Methode des externen Standards durchgeführt.

In einer Kalibrierphase werden zunächst die NIR-Spektren am Probenahmeort bevorzugt kontinuierlich nacheinander aufgenommen und zusammen mit der Information Datum und Uhrzeit der Spektrenaufnahme gespeichert. Von der zu der NIR-Messzelle gehörenden Probenahmestelle werden Proben genommen und im Labor analysiert. Zu jeder Probe werden die erzielten Analysenergebnisse sowie Datum und Uhrzeit der Probenahme festgehalten. Sobald typischerweise mindestens 50-200 Datensätze bestehend aus Labor-Analysenergebnissen und online-NIR-Spektren vorliegen, wird bevorzugt mittels chemometrischer Methoden eine Kalibrierung erstellt.

Auch bei der quantitativen Bestimmung für die Kalibrierung wird z.B. der PLS (Partial Least Squares)-Algorithmus angewendet. Die Qualität der Kalibrierung kann z.B. durch Kreuzvalidierung oder anhand eines nicht im Kalibrierdatensatz vorhandenen Testprobensatzes beurteilt werden.

Nach Fertigstellung einer Kalibrierung werden die NIR-Spektren im Herstellprozess aufgenommen und daraus die dazu gehörenden Analysenergebnisse ermittelt. Beispielsweise kann aus dem Signal im Bereich 6800-7000 cm⁻¹ wegen der Proportionalität von Extinktion und Konzentration (Lambert-Beer'sches Gesetz) die Konzentration von Caprolactam ermittelt werden.

Da die NIR-Spektrenaufnahme und -auswertung automatisiert in schneller zeitlicher Abfolge durchgeführt werden können, stehen die benötigten Analysendaten in hoher zeitlicher Dichte zur Verfügung. Ein weiterer Vorteil der insbesondere online durchgeführten NIR-Analyse bei der Herstellung von Polyamid aus Lactamen besteht in der einfachen Durchführbarkeit der Analysen im Vergleich zu anderen Analysemethoden, welche nicht online, sondern nach Probenahme im Labor erfolgen. Bei der online-Analyse des erfindungsgemäßen Verfahrens entfällt die Probenahme. Der technische Aufwand ist gegenüber klassischen Laboranalysen deutlich geringer. Vorteilhaft an einer NIR-Analyse ist es, dass mehrere verschiedene Parameter mit einer Analysemethode und einer Messung bestimmt werden können. Außerdem müssen für die NIR-Analyse, anders als z.B. bei nasschemischen Analyseverfahren, keine chemischen Produkte eingesetzt oder Abfallprodukte bzw. Zersetzungsprodukte der analysierten Probe entsorgt werden.

### Beispiel 1: Bestimmung von Caprolactam in Polyamidschmelze durch NIR-Spektroskopie

Polyamid 6 sowie Mischungen von Polyamid 6 mit einem definierten Gewichtsanteil Caprolactam und dimerem Caprolactam wurden mit einem Extruder PTW 16 mit Schmelzepumpe bei einem Durchsatz von 2,5 kg/h und einer Schmelzetemperatur von ca. 250°C durch eine auf 250°C temperierte NIR-Messzelle mit einer optischen Schichtdicke von 3 mm gepumpt.

Die NIR-Messzelle enthält gegenüberliegend zwei Fenster aus Saphir. Die Fenster sind gegenüber der unter Druck stehenden Schmelze abgedichtet. Vor den Fenstern sind zwei Kollimatoren angeordnet, an denen Lichtleiter angeschlossen sind. Beide Lichtleiter sind mit einem NIR-Spektrometer verbunden. Ein Lichtleiter transportiert die NIR-Messstrahlung vom Spektrometer zur Messzelle, während der andere das nach dem Durchgang durch die Schmelze empfangene NIR-Licht zum Detektor des Spektrometers zurückführt.

Die NIR-Spektren wurden fortlaufend mit einem Bruker Matrix-F-Spektrometer (Hersteller: Bruker Optik GmbH, Deutschland) aufgenommen.

Die spektrale Auflösung betrug 4 cm⁻¹, die Messzeit pro Spektrum ca. 3 min.

Zunächst wurde das Spektrum von reinem Polyamid 6 aufgenommen. Hierzu wurde reines Polyamid 6 durch den Extruder gefördert. Nachfolgend wurden Mischungen aus Polyamid 6 und definierten Mengenanteilen durch den Extruder gefördert. Von den aufgenommenen NIR-Spektren wurde jeweils das Spektrum des reinen Polyamid 6 subtrahiert.

### Beispiel 2: Bestimmung von Caprolactam und cyclischen Oligomeren in Polyamidgranulat durch NIR-Spektroskopie

Die NIR-Spektren der Granulate wurden mit einem Bruker IFS 28/N Spektrometer (Hersteller: Bruker Optik GmbH, Deutschland) mit spezieller Vorrichtung zur Aufnahme der Spektren von Pulvern bzw. Granulaten (Integratrionskugelmodul, Hersteller: Bruker Optik GmbH, Deutschland) aufgenommen. Hierbei befindet sich die Probe in einem Gefäß mit einem Quarzboden. Die Messstrahlung tritt von unten in die Probe ein. Das vom Granulat gestreute Licht wird mit Hilfe einer Ulbricht-Kugel eingesammelt und zum Detektor geleitet. Durch Drehen der Probe während der Messung wird die Reproduzierbarkeit der Spektren verbessert.

Zur Kalibrierung wurden die NIR-Spektren von ca. 100 Proben mit unterschiedlichem Gehalt an Caprolactam (0-8 Gew.-hem Gehalt an Wasser als typische Störgröße aufgenommen. Die Caprolactam-Gehalte wurden durch HPLC bestimmt. Für die Kalibrierung wurde die PLS-Methode angewendet. Dabei wurde der Spektralbereich von 6000-5400 cm⁻¹ berücksichtigt.

Die Kreuzvalidierung ergab eine Übereinstimmung zwischen den Ergebnissen der HPLC-Methode (Vergleichsmethode) und der NIR-Methode von 0,2 Gew.-% für Caprolactam und 0,03 Gew.-% für dimeres, trimeres und tetrameres Caprolactam.

## Patentansprüche

1. Verfahren zur Herstellung von Polyamid durch Polykondensation wenigstens eines Lactams und anschließender Granulierung des Polyamids, wobei die Polykondensation mindestens einstufig durchgeführt wird, **dadurch gekennzeichnet, dass** während und/oder nach der Polykondensation und/oder vor, während und/oder nach der Granulierung ein Gemisch, enthaltend Lactam und/oder Oligomere des Lactams, mittels Nahinfrarot-Spektroskopie analysiert wird.

2. Verfahren nach Anspruch 1, **dadurch gekennzeichnet, dass** die Polykondensation zweistufig durchgeführt wird, wobei in der ersten Stufe die Herstellung des Präpolymers mittels Hydrolyse des Lactams und in der zweiten Stufe die Polykondensation des Präpolymers erfolgt.

3. Verfahren nach einem der Ansprüche 1 oder 2, **dadurch gekennzeichnet, dass** das Lactam Caprolactam ist.

4. Verfahren nach einem der Ansprüche 1-3, **dadurch gekennzeichnet, dass** die Analyse mittels Nahinfrarot-Spektroskopie online erfolgt.

5. Verfahren nach einem der Ansprüche 1-4, **dadurch gekennzeichnet, dass** die Lactam und/oder Oligomere des Lactam enthaltende Polymerschmelze während der Polykondensation analysiert wird.

6. Verfahren nach einem der Ansprüche 1-5, **dadurch gekennzeichnet, dass** das Lactam und/oder Oligomere des Lactams enthaltende Granulat analysiert wird.
